# EUROPEAN PATENT SPECIFICATION

(11) **EP 1 963 400 B1**
(45) Date of publication and mention of the grant of the patent: **01.02.2012**
(21) Application number: 06830751.1
(22) Date of filing: 20.12.2006
(51) Int. Cl.: C08G 73/14, C08G 18/34, C09D 179/08, C08L 79/08

(54) **Method of producing acid functional polyamideimides**
Verfahren zur Herstellung säurefunktioneller Polyamidimide
Procédé de production de polyamide-imides à fonctions acides

(30) Priority: 21.12.2005 US 314267
(43) Date of publication of application: 03.09.2008
(73) Proprietor: Altana Electrical Insulation GmbH, 46483 Wesel (DE)
(72) Inventor: MURRAY, Thomas J., Chesterfield, Missouri 63005 (US); MEISTER, Philip R., Belleville, Illinois 62223 (US)
(74) Representative: Fitzner, Uwe
(86) International application number: PCT/EP2006/069990
(87) International publication number: WO 2007/071717

(56) References cited:
- GB-A- 1 419 881
- US-A- 3 518 219
- US-A- 4 252 707
- DATABASE WPI Week 198901 Derwent Publications Ltd., London, GB; AN 1989-004301 XP002439516 -& JP 63 283705 A (AGENCY OF IND SCI & TECHNOLOGY) 21 November 1988 (1988-11-21)

## Description

This invention relates to polyamideimide (PAI) base coating compositions; and more particularly, to such coating compositions having excess carboxyl functionality.

Resinous coating compositions in the form of varnishes and enamels, and in which, for ease of application, the polymer is dissolved in compatible solvents, are well known. Polyamideimide compositions are described, for example, in United States Patent 4,259,221.

Among the most useful coating compositions are those based on polyamideimides. Polyamideimide coating compositions form flexible and durable films, and are particularly useful as wire enamels, varnishes, adhesives for laminates, non-stick coatings, paints and the like. These compositions are particularly noted for their long term high temperature capability (≈ 220°C (430°F)). In addition, the compositions are also useful in electrical insulating applications (such as for magnet wire enamels) and as non-stick coatings for cookware.

Heretofore, polyamideimides have been prepared using relatively expensive organic solvents which has made it economically unfeasible to use amideimide coatings. The high level of VOC's produced by the organic solvents has also been a factor in limiting their use.

### BRIEF SUMMARY OF THE INVENTION

As an example of polyamideimide preparation, a carboxylic anhydride is reacted together with an organic primary amine to form an amideimide prepolymer. This prepolymer is then reacted with a polyisocyanate to produce a relatively high molecular weight block polymer that, in solution, affords desirable film-forming and other characteristics inherent in polyamideimides.

A variety of carboxylic anhydrides are used in making polyamideimides. These include, but are not limited to: trimellitic anhydride (TMA); 2,6,7-naphthalene tricarboxylic anhydride; 3,3',4-diphenyl tricarboxylic anhydride; 3,3',4-benzophenone tricarboxylic anhydride; 1,3,4-cyclopentane tetracarboxylic anhydride; 2,2',3-diphenyl tricarboxylic anhydride; diphenyl sulfone 3,3',4-tricarboxylic anhydride; diphenyl isopropylidene 3,3',4-tricarboxylic anhydride; 3,4,10-perylene tricarboxylic anhydride; 3,4-dicarboxyphenyl 3-carboxyphenyl ether anhydride; ethylene tricarboxylic anhydride; 1,2,5-naphthalene tricarboxylic anhydride. The tricarboxylic acid materials are characterized by the formula 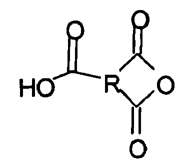 where R is a trivalent organic radical.

Polyamines useful in the above connection are well known in the art, and may be expressed by the formula:

X-R"-(-NH₂)ₙ

where R" is an organic radical, X is hydrogen, an amino group or an organic group including those containing at least one amino group, and n has a value of 2 or more. Polyamines can also be expressed by the formula:

R"-(-NH₂).

where R'" is a member selected from a class consisting of organic radicals having at least two carbon atoms (both halogenated and unhalogenated) including, but not limited to, for example, hydrocarbon radicals of up to 40 carbon atoms, and groups consisting of at least two aryl residues attached to each other through the medium of a member selected from a class consisting of an alkylene radical having from 1 to 10 carbon atoms, -S-, -SO₂-, 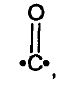 and -O- In the above formula, n again has a value of at least 2.

The following amines can be useful either alone or in mixtures:
p-xylene diamine
bis(4-amino-cyclohexyl)methane
hexamethylene diamine
heptamethylene diamine
octamethylene diamine
nonamethylene diamine
decamethylene diamine
3-methyl-heptamethylene diamine
4,4'-dimethylheptamethylene diamine
2,11-diamino-dodecane
1,2-bis-(3-amino-propoxy)ethane
2,2-dimethyl propylene diamine
3-methoxy-hexamethylene diamine
2,5-dimethylhexamethylene diamine
2,5-dimethylheptamethylene diamine
5-methylnonamethylene diamine
1,4-diamino-cyclo-hexane
1,12-diamino-octadecane
2,5-diamino-1,3,4-oxadiazole
H₂ N(CH₂)₃ O(CH₂)₂ O(CH₂)₃ NH₂
H₂ N(CH₂)₃ S(CH₂)₃ NH₂
H₂ N(CH₂)₃ N(CH₃)(CH₂)₃ NH₂
meta-phenylene diamine
para-phenylene diamine
4,4'-diamino-diphenyl propane
4,4'-diamino-diphenyl methane benzidine
4,4'-diamino-diphenyl sulfide
4,4'-diamino-diphenyl sulfone
3,3'-diamino-diphenyl sulfone
4,4'-diamino-diphenyl ether
2,6-diamino-pyridine
bis(4-amino-phenyl)diethyl silane
bis(4-amino-phenyl)diphenyl silane
bis(4-amino-phenyl)phosphine oxide
4,4'-diaminobenzophenone
bis(4-amino-phenyl)-N-methylamine
bis(4-aminobutyl)tetramethyldisiloxane
1,5-diaminonaphthalene
3,3'-dimethyl-4,4'-diamino-biphenyl
3,3'-dimethoxy benzidine
2,4-bis(beta-amino-t-butyl)toluene toluene diamine
bis(para-beta-amino-t-butyl-phenyl)ether
para-bis(2-methyl-4-amino-pentyl)benzene
para-bis(1,1-dimethyl-5-amino-pentyl)benzene
m-xylylene diamine
polymethylene polyaniline

Any polyisocyanate, that is, any isocyanate having two or more isocyanate groups, whether blocked or unblocked, can be used in making polyamideimides. Blocked isocyanates using, for example, phenols or alcohols as the blocking constituent, can also be used. In general, they provide a higher molecular weight of the final material and this is advantageous, for example, in varnishes. On the other hand, unblocked isocyanates provide more flexible final materials. Regardless of which is used, as much of the blocking material must be evaporated off as possible, and there is no advantage, from a purely reaction point of view, as to which material is used. A typical blocked polyisocyanate is Mondur S™ (available from Mobay Chemical Company) in which mixtures of 2,4- and 2,6-tolylene diisocyanate are reacted with trimethylol propane, and blocked by esterification with phenol in the proportions of three moles of isocyanate, one mole of trimethylol propane, and three moles of phenol. Another blocked polyisocyanate is Mondur SH™ (available from Mobay Chemical Company), in which isocyanate groups of mixed 2,4- and 2,6-tolylene diisocyanate are blocked by esterification with cresol. Polyisocyanates which are useful alone, or in admixture, include:
tetramethylenediisocyanate
hexamethylenediisocyanate
1,4-phenylenediisocyanate
1,3-phenylenediisocyanate
1,4-cyclohexylenediisocyanate
2,4-tolylenediisocyanate
2,5-tolylenediisocyanate
2,6-tolylenediisocyanate
3,5-tolylenediisocyanate
4-chloro-1,3-phenylenediisocyanate
1-methoxy-2,4-phenylenediisocyanate
1-methyl-3,5-diethyl-2,6-phenylenediisocyanate
1,3,5-triethyl-2,4-phenylenediisocyanate
1-methyl-3,5-diethyl-2,4-phenylenediisocyanate
1-methyl-3,5-diethyl-6-chloro-2,4-phenylenediisocyanate
6-methyl-2,4-diethyl-5-nitro-1,3-phenylenediisocyanate
p-xylylenediisocyanate
m-xylylenediisocyanate
4,6-dimethyl-1,3-xylylenediisocyanate
1,3-dimethyl-4,6-bis-(b-isocyanatoethyl)-benzene
3-(a-isocyanatoethyl)-phenylisocyanate
1-methyl-2,4-cyclohexylenediisocyanate
4,4'-biphenylenediisocyanate
3,3'-dimethyl-4,4'-biphenylenediisocyanate
3,3'-dimethoxy-4,4'-biphenylenediisocyanate
3,3'-diethoxy-4,4-biphenylenediisocyanate
1,1-bis-(4-isocyanatophenyl)cyclohexane
4,4'-diisocyanato-diphenylether
4,4'-diisocyanato-dicyctohexylmethane
4,4'-diisocyanato-diphenylmethane
4,4'-diisocyanato-3,3'-dimethyldiphenylmethane
4,4'-diisocyanato-3,3'-dichlorodiphenylmethane
4,4'-diisocyanato-diphenyldimethylmethane
1,5-naphthylenediisocyanate
1,4-naphthylenediisocyanate
4,4',4"-triisocyanato-triphenylmethane
2,4,4'-triisocyanato-diphenylether
2,4,6-triisocyanato-1-methyl-3,5-diethylbenzene
o-tolidine-4,4'-diisocyanate
m-tolidine-4,4'-diisocyanate
benzophenone-4,4'-diisocyanate
biuret triisocyanates
polymethylenepolyphenylene isocyanate

Generally speaking, a slight molar excess of carboxylic acid anhydride and organic polyamine is heated from 200°C (392°F) to 245°C (473°F) in an inert atmosphere and with a solvent as described above. This drives off any water formed, and forms an amideimide group containing a prepolymer. A polyisocyanate is then added and the mixture reacted to form a block amideimide prepolymer having a relatively high molecular weight. This is then cured (as by heating) to form a flexible film or coating. Alternatively, carboxylic anhydride and organic diamine are reacted in equimolar proportions to provide desirable flexible films or coatings, wire enamels, paints, laminate adhesives.

A second more common method involves the use of equimolar amounts of carboxylic acid anhydride and diisocyanate. The polymer molecular weight builds upon evolution of CO₂ gas. The polymer is typically synthesized in an inert solvent such as NMP or DMF.

As taught, for example, in United States Patent No. 3,817,926, up to 75 mole percent of the carboxylic anhydride can be replaced by a substituted or unsubstituted aliphatic anhydride or diacid such as oxalic, maleic, succinic, glutaric, adipic, pimelic, suberic, azelaic, sebacic and dodecanedioic, as well as unsaturated materials including maleic and fumaric materials, among others. Such acids are expressed by the formula:

HOOC--R'--COOH

where R' is a divalent saturated or unsaturated aliphatic group, or one containing a carbon-to-carbon double bond and having from one to 40 carbon atoms. The anhydrides can be expressed by the formula:

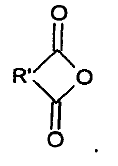

The normal organic solvents used for such materials include cresols or cresylic acid, phenol, xylene, N-methylpyrrolidone, dimethylformamide, dimethyl sulfoxide, dimethylacetamide, which not only tend to pollute the atmosphere during the curing process, but in some instances are toxic or flammable and may cause serious chemical burns.

The above preparation method for polyamideimides is exemplary only, and other methods are taught in the cited patents, as well in literature relevant to this art including, for example, New Linear Polymers, Lee et al, McGraw-Hill, 1967.

Based on the foregoing, it would be highly desirable, and the high temperature characteristics of polyamideimide coating compositions would be more fully commercially realized, if cheaper solvents were available for use in producing the compositions.

A method for producing polyamideimide coating compositions containing relatively inexpensive solvent systems is disclosed. These systems are not only more economically feasible to use in formulating coating compositions, but they also do not produce undesirable concentrations of pollutants when they evaporate during curing of a resin base. In addition to minimizing use of the expensive organic solvents currently used in preparing polyamideimide coating compositions, a further advantage is the ability to use a solvent such as water which is not only cheaper, but safer on the environment.

In accordance with an aspect of the inventive method, the polyamideimide base coating compositions have excess carboxyl functionality. The excess carboxylates are incorporated through the addition of a condensation product of a triamine, and three equivalents of triacid anhydride or two equivalents of a triacid anhydride, and one equivalent of a compound of formula 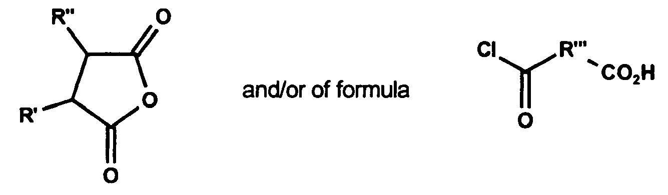 in which R' and R" is H, a substituted or unsubstituted alkyl or aryl group (including a 1,2-disubstituted aryl ring group); and R'" is any substituted or unsubstituted aliphatic or aromatic group. The free carboxylates are neutralized with a tertiary amine allowing a reduction in water (or alternative solvents) that is typically non-compatible with polyamideimide resins.

### DETAILED DESCRIPTION OF INVENTION

The following detailed description illustrates the invention by way of example and not by way of limitation. This description will clearly enable one skilled in the art to make and use the invention, and describes several embodiments, adaptations, variations, alternatives and uses of the invention, including what we presently believe is the best mode of carrying out the invention. As various changes could be made in the above constructions without departing from the scope of the invention, it is intended that all matter contained in the above description or shown in the accompanying drawings shall be interpreted as illustrative and not in a limiting sense.

A triamine is first reacted with two to three equivalents of a triacid anhydride. The triamine can be either aliphatic, aromatic, or a mixture of both. The triamine can comprise two primary amines and one or more secondary amines. Examples of acceptable triamines include, but are not limited, to diethylenetriamine (DETA), dipropylenetriamine (DPTA), and 4,4'-diaminodiphenylamine (DADPA). The triacid anhydride can also include a triacid, such as trimellitic acid, which can be dehydrated to trimellitic anhydride. Another substitution can be a triacid anhydride acid chloride such as trimellitic acid chloride.

The triacid anhydride first reacts with the two primary amines on the triamine. A compound of formula 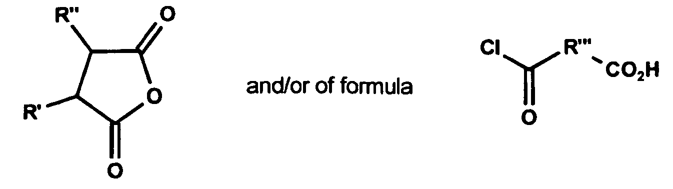 in which R' and R" is H, a substituted or unsubstituted alkyl or aryl group (including a 1,2-disubstituted aryl ring group); and R'" is any substituted or unsubstituted aliphatic or aromatic group, such as trimellitic anhydride, phthalic anhydride or terephthaloyl chloride, is used to react with the secondary amine, after the two primary amines are reacted with the triacid anhydride.

The reaction equation is shown below: 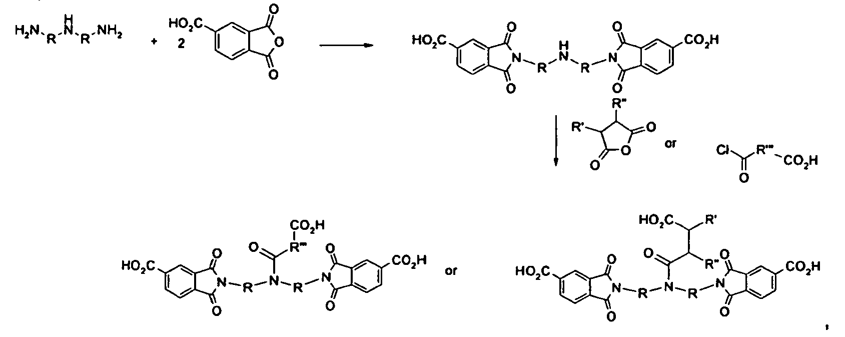 where R is any substituted or unsubstituted aliphatic or aromatic group; R' and R" is H, a substituted or unsubstituted alkyl or aryl group (including a 1,2-disubstituted aryl ring group); and R'" is any substituted or unsubstituted aliphatic or aromatic group.

In a typical PAI synthesis involving a diisocyanate and a triacid anhydride, a 1:1 molar ratio of diisocyanate and triacid anhydride is used. The triamine/triacid anhydride adducts shown above can replace a 10-90 mole fraction of the triacid anhydride in a typical 1:1 ratio of triacid anhydride to diisocyanate. The resulting solution is then heated to between 80-200°C (176-392°F) to build polymer molecular weight and resultant viscosity.

A second method to accomplish the same polymer is to convert two of the above monomer acid groups to acid chlorides. This can be accomplished with reagents such as thionyl chloride or phosphoryl chloride. In a typical PAI synthesis involving a diamine and a triacid anhydride acid chloride, a 1:1 molar ratio of diamine and triacid anhydride acid chloride is used. The resultant monomers shown above can replace a 10-90 mole fraction of the triacid anhydride acid chloride in a typical 1:1 ratio of triacid anhydride acid chloride to diamine. The resulting solution is then stirred at room temperature to build polymer molecular weight and resultant viscosity.

Shown below is the reaction between 3 moles of TMA and a triamine. The condensation product then replaces a portion of the TMA in its reaction with methylenephenyldiisocyanate (MDI). The resultant polyamideimide polymer is then obtained along with other derivatives.

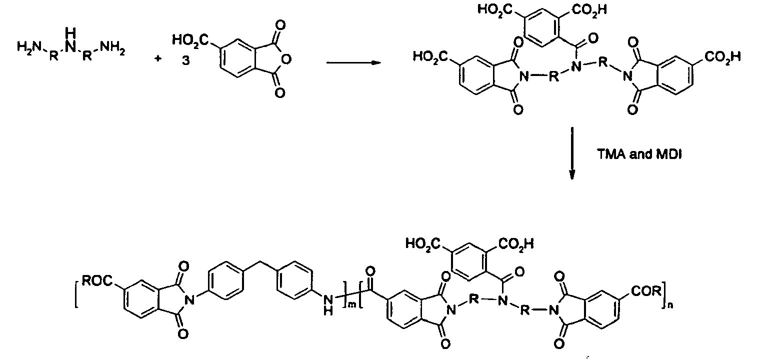

The amines or amine group containing materials useful in reduction of the polymer material in water are preferably tertiary amines and include, among others, dimethylethanolamine, triethanolamine, phenylmethylethanolamine, butyldiethanolamine, phenyldiethanolamine, phenylethylethanolamine, methyldiethanolamines, and triethylamine. Secondary amines are also useful. Present coating compositions are made in a wide range of solids contents to suit a particular application, consistent with coating ease and capability. Generally, the solids content ranges from 10-40% by weight of the solids, or even more from a practical point of view.

Summarizing the instant invention, the following list and its members are preferred embodiments of the instant invention:
A. A method of producing a polyamideimide (PAI) resin comprising:
   reacting a triacid anhydride with a diisocyanate, wherein 10-90 mole% of the triacid anhydride is replaced with a condensation product of a triamine with two equivalents of an triacid anhydride and one equivalent of a compound of formula 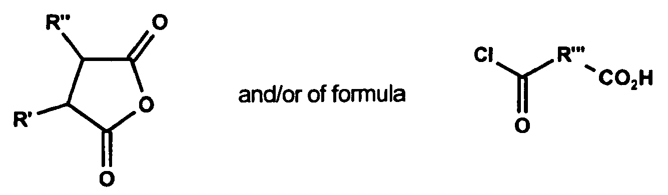 in which R' and R" is H, a substituted or unsubstituted alkyl or aryl group (including a 1,2-disubstituted aryl ring group); and R'" is any substituted or unsubstituted aliphatic or aromatic group.
B. The method of list-member A wherein the triacid anhydride and diisocyanate are reacted in approximately equimolar amounts.
C. The method of list-member A wherein the triacid anhydride is trimellitic anhydride (TMA).
D. The method of list-member A wherein the diisocyanate is methylenediphenylisocyanate (MDI).
E. The method of list-member A where the triamine is an aliphatic or aromatic triamine comprising two primary amines and at least one secondary amine.
F. The method of list-member A wherein the compound of formula 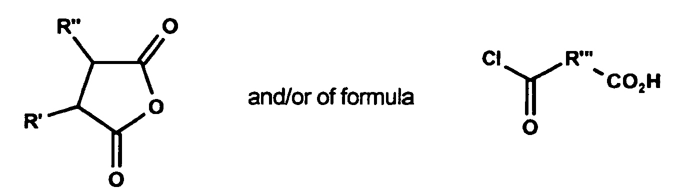 in which R' and R" is H, a substituted or unsubstituted alkyl or aryl group (including a 1,2-disubstituted aryl ring group); and R'" is any substituted or unsubstituted aliphatic or aromatic group, is chosen from the group consisting of an anhydride, an acid chloride and combinations thereof.
G. The method of list-member E wherein the triamine is chosen from the group consisting of diethylenetriamine (DETA), dipropylenetriamine (DPTA), diaminodiphenylamine (DADPA) and combinations thereof.
H. The method of list-member F wherein the anhydride is chosen from the group consisting of trimellitic anhydride, phthalic anhydride and combinations thereof.
I. The method of list-member F wherein the acid chloride is terephthaloyl chloride.
J. The method of list-member A wherein the condensation product of the triamine with the triacid anhydride is the reaction of one or more of diethylenetriamine (DETA), dipropylenetriamine (DPTA) and diaminodiphenylamine (DADPA) with approximately 3 trimellitic anhydride (TMA) equivalents.
K. The method of list-member J wherein the condensation product of the triamine and the triacid anhydride is formed in-situ.
L. The method of list-member J wherein the condensation product of the triamine and the triacid anhydride is produced separately prior to making the polyamideimide resin.
O. A method of producing a polyamideimide resin comprising:
   reacting a triacid anhydride acid chloride with a diamine, wherein 10-90 mole % of the triacid anhydride acid chloride is replaced with a condensation product of a triamine with two equivalents of a triacid anhydride and one equivalent of a compound of formula 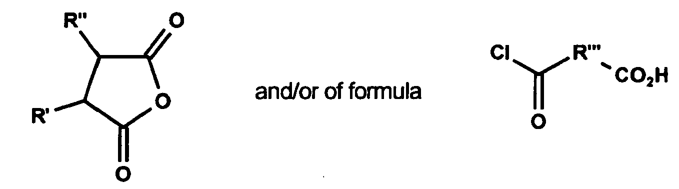
   in which R' and R" is H, a substituted or unsubstituted alkyl or aryl group (including a 1,2-disubstituted aryl ring group); and R'" is any substituted or unsubstituted aliphatic or aromatic group.
P. The method of list-member O wherein the acid groups are converted to acid chlorides.
Q. The method of list-member P wherein the triacid anhydride acid chloride and diamine are reacted in approximately equimolar amounts.
R. The method of list-member P wherein, in the condensation product of a triamine and a triacid anhydride, the triamine is reacted with approximately three equivalents of the triacid anhydride.
S. The method of list-member 16 wherein the triacid anhydride acid chloride is trimellitic acid chloride.
T. The method of list-member O wherein the diamine is methylenediphenylamine (MDA).
U. The method of list-member O where the triamine is an aliphatic or aromatic triamine comprising two primary amines and at least one secondary amine.
V. The method of list-member U wherein the triamine is chosen from the group consisting of diethylenetriamine (DETA), dipropylenetriamine (DPTA), diaminodiphenylamine (DADPA) and combinations thereof.
W. The method of list-member O wherein the compound of formula 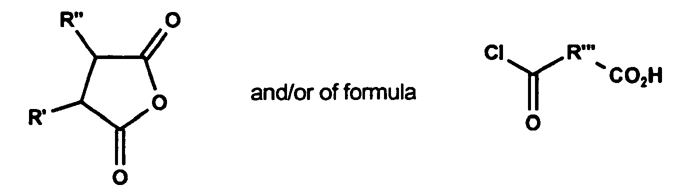 in which R' and R" is H, a substituted or unsubstituted alkyl or aryl group (including a 1,2-disubstituted aryl ring group); and R"' is any substituted or unsubstituted aliphatic or aromatic group is chosen from the group consisting of an anhydride, an acid chloride and combinations thereof.
X. The method of list-member W wherein the anhydride is chosen from the group consisting of trimellitic anhydride, phthalic anhydride and combinations thereof.
Y. The method of list-member W wherein the acid chloride is terephthaloyl chloride.
Z. The method of list-member O wherein the condensation product of the triamine with the triacid anhydride is the reaction of one or more of diethylenetriamine (DETA), dipropylenetriamine (DPTA) and diaminodiphenylamine (DADPA) with approximately 3 trimellitic anhydride (TMA) equivalents.
AA. The method of list-member Z wherein the condensation product of the triamine and the triacid anhydride is formed in-situ.
BB. The method of list-member Z wherein the condensation product of the triamine and the triacid anhydride is produced separately prior to making the polyamideimide resin.

### EXAMPLE 1

To 160.0g glacial acetic acid, add 38.4g (2 equivalents) of trimellitic anhydride and 10.3g (1 equivalent) of diethylenetriamine. Stir the resulting mixture under a nitrogen blanket and heat the batch to a reflux temperature of 110-120°C (230-248°F). Hold for one (1) hour. Cool the batch to room temperature and allow the product to precipitate out of the solution. Filter off the product, wash it with ethanol, and dry the product in an oven. The final product was a tan powder. The material was characterized by NMR and MS to confirm the structure of a bisimide adduct with the secondary amine unreacted.

### EXAMPLE 2

To 160.0g of glacial acetic acid, add 38.4g (2 equivalents) of trimellitic anhydride and 13.1g (1 equivalent) of dipropylenetriamine. Stir the mixture under a nitrogen blanket. Heat the batch to a reflux temperature of 110-120°C (230-248°F) and hold for one (1) hour. Cool the batch to room temperature and allow the product to precipitate out of the solution. Filter off the product, wash it with ethanol, and dry the product in an oven. The final product was a white powder. The material was characterized by NMR and MS to confirm the structure of a bisimide adduct with the secondary amine unreacted.

### EXAMPLE 3

To 1000.0g of glacial acetic acid, add 384.2g (2 equivalents) of trimellitic anhydride and 297.3g (1 equivalent) of 4, 4'-diaminodiphenylamine sulfate. Stir the mixture under a nitrogen blanket. Heat the batch to a reflux temperature of 110-120°C (230-248°F) and hold for three (3) hours. Cool the batch to room temperature and allow the product to precipitate out of the solution. Filter off the product, wash it with methanol, and dry the product in an oven. The final product was a dark blue powder. The material was characterized by NMR and MS to confirm the structure of a bisimide adduct with the secondary amine unreacted.

### EXAMPLE 4

To 673.0g of glacial acetic acid, add 387.8g (3 equivalents) of trimellitic anhydride and 200.1g (1 equivalent) of 4, 4'-diaminodiphenylamine sulfate. Stir the mixture under a nitrogen blanket. Heat the batch to a reflux temperature of 110-120°C (230-248°F) and hold for six (6) hours. Cool the batch to room temperature and allow the product to precipitate out of the solution. Filter off the product, wash it with methanol, and dry the product in an oven. The final product was a dark blue powder. The material was characterized by NMR and MS to confirm the structure of a bisimide adduct with the secondary amide of trimellitic anhydride.

### EXAMPLE 5

To 1323.0g of N-methyl-2-pyrrolidone, add 324.8g (3 equivalents) of trimellitic anhydride and 58.2g (1 equivalent) of diethylenetriamine. Stir the mixture under a nitrogen blanket. Next, heat to 190°C (374°F) and hold for distillate loss. Cool to 60°C (140°F) and add to the solution 433.1g trimellitic anhydride and 704.9g 4,4'-methylenebis(phenyl isocyanate). Successively heat the resulting solution first to 95°C (203°F) and hold one (1) hour, then to 110°C (230°F) and hold for one (1) hour, and then to 120°C (248°F) and hold until solution has an in-process Gardner-Holt viscosity of R. Quench the batch with 23.1g of methanol and thin it with 1488.2g of N-methyl-2-pyrrolidone. Cool the batch to 25°C (77°F) and add 126.0g of dimethanolamine. The final product is a dark brown, viscous liquid. Reduce this final product by 100% with water. The resulting mixture was a semi-gelatinous solution. The product could also be reduced in solvents such as Glycol Ether EB and Acetone to produce a clear, homogeneous solution.

The resulting polymer solution was coated onto an aluminum panel using a Meyer bar to achieve approximately 15-20 µm of dry film thickness. The coating was cured in a vented oven at 260°C (500°F) for thirty (30) minutes. A yellow film of good adhesion and coating quality was obtained.

The resultant solution was also applied to an 18 AWG copper wire which was precoated with four passes of polyester basecoat at a speed of 9.14-12.2 m (30-40 feet) per minute (fpm) and cured in an oven having a temperature range of 400-500°C (752-932°F). The insulation buildup was approximately 78.7-83.3 µm (3.1-3.3 mil) with the polyamideimide topcoat being 1.78-2.03 µm (0.7-0.8 mil) in thickness. Wire properties were equivalent to the control sample that did not have the acid functionality inherent in the polymer backbone.

### EXAMPLE 6

To 1812.0g of N-methyl-2-pyrrolidone, add 597.2g (3 equivalents) of trimellitic anhydride and 106.9g (1 equivalent) of diethylenetriamine. Stir mixture under a nitrogen blanket, heat to 190°C (374°F), and hold for distillate loss. Cool the mixture to 60°C (140°F) and to the solution add 298.6g of trimellitic anhydride and 648.1g of 4,4'-methylenebis(phenyl isocyanate). Successively heat the resulting solution first to 95°C (203°F) and hold one (1) hour, then to 110°C (230°F) and hold for one (1) hour, and then to 120°C (248°F) and hold until solution has an in-process Gardner-Holt viscosity of S. Quench the batch with 21.2g of methanol and thin it with 1368.2g of N-methyl-2-pyrrolidone. The final product is a dark brown, viscous liquid. Cool the batch to 25°C (77°F) and add 282.0g of dimethanolamine. The final product is a dark brown, viscous liquid. Reduce this final product by 100% with water. The resulting mixture was a fluid solution containing no particulate nor gel material.

The resulting polymer solution was coated onto an aluminum panel using a Meyer bar to achieve approximately 15-20 µm of dry film thickness. The coating was cured in a vented oven at 260°C (500°F) for thirty (30) minutes. A yellow film of good adhesion and coating quality was obtained that exhibited a Tg of 253°C (487°F) by DSC.

### EXAMPLE 7

To 1812.0g of N-methyl-2-pyrrolidone, add 597.2g (3 equivalents) of trimellitic anhydride, 307.9g (1 equivalent) of 4,4'-diaminodiphenylamine sulfate, and 200 g of sodium carbonate. Stir mixture under a nitrogen blanket, heat to 190°C (374°F), and hold for distillate loss. Cool the resulting mixture to 60°C (140°F) and to the solution add 298.6g of trimellitic anhydride and 648.1g of 4,4'-methylenebis(phenyl isocyanate). Successively heat the resulting solution first to 95°C (203°F) and hold one (1) hour, then to 110°C (230°F) and hold for one (1) hour, and then to 120°C (248°F) and hold until solution has an in-process Gardner-Holt viscosity of S. Quench the batch with 21.2g of methanol and thin it with 1368.2g of N-methyl-2-pyrrolidone. The final product is a dark brown liquid. Now cool to 25°C (77°F) and add 282.0g of dimethanolamine. Reduce the final product by 100% with water. The resulting mixture was a fluid solution containing no particulate nor gel material.

### CONTROL EXAMPLE 1

To 1323.0g of N-methyl-2-pyrrolidone, add 539.7g (1 equivalent) of trimellitic anhydride and 702.6g (1 equivalent) of 4,4'-methylenebis(phenyl isocyanate). Successively heat the resulting solution first to 95°C (203°F) and hold one (1) hour, then to 110°C (230°F) and hold for one (1) hour, and then to 120°C (248°F) and hold until solution has an in-process Gardner-Holt viscosity of R. Quench the batch with 23.1 g of methanol, and then thin it with 1488.2g of N-methyl-2-pyrrolidone. Cool to 25°C (77°F) and add 126.0g dimethanolamine. The final product is a dark brown, viscous liquid and could not be reduced with water. Water addition resulted in precipitation of the polymer from solution yielding a yellow solid. Reduction with either Glycol Ether EB or acetone also yielded a cloudy solution with particulate matter.
In view of the above, it will be seen that the several objects and advantages of the present invention have been achieved and other advantageous results have been obtained.

## Claims

1. A method of producing a polyamideimide (PAI) resin comprising:
reacting a triacid anhydride with a diisocyanate, wherein 10-90 mole% of the triacid anhydride is replaced with a condensation product of a triamine with two equivalents of an triacid anhydride and one equivalent of a compound of formula 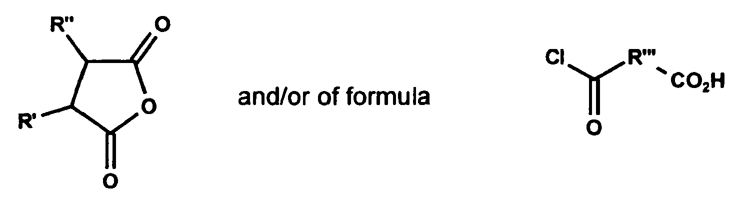 in which R' and R" is H, a substituted or unsubstituted alkyl or aryl group (including a 1,2-disubstituted aryl ring group); and R"' is any substituted or unsubstituted aliphatic or aromatic group.

2. The method of claim 1 wherein the triacid anhydride and diisocyanate are reacted in approximately equimolar amounts.

3. The method of claim 1 where the triamine is an aliphatic or aromatic triamine comprising two primary amines and at least one secondary amine.

4. The method of claim 1 wherein the condensation product of the triamine with the triacid anhydride is the reaction of one or more of diethylenetriamine (DETA), dipropylenetriamine (DPTA) and diaminodiphenylamine (DADPA) with approximately 3 trimellitic anhydride (TMA) equivalents.

5. A method of producing a polyamideimide resin comprising:
reacting a triacid anhydride acid chloride with a diamine, wherein 10-90 mole% of the triacid anhydride acid chloride is replaced with a condensation product of a triamine with two equivalents of a triacid anhydride and one equivalent of a compound of formula 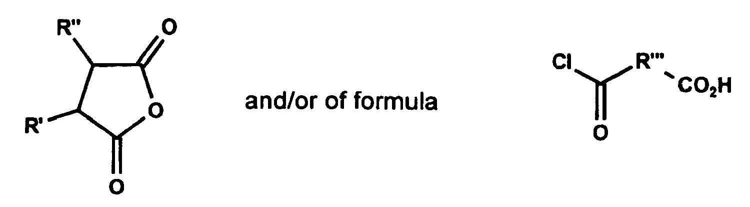 in which R' and R" is H, a substituted or unsubstituted alkyl or aryl group (including a 1,2-disubstituted aryl ring group); and R"' is any substituted or unsubstituted aliphatic or aromatic group.

6. The method of claim 5 wherein the acid groups are converted to acid chlorides.

7. The method of claim 6 wherein the triacid anhydride acid chloride and diamine are reacted in approximately equimolar amounts.

8. The method of claim 6 wherein, in the condensation product of a triamine and a triacid anhydride, the triamine is reacted with approximately three equivalents of the triacid anhydride.

9. The method of claim 5 where the triamine is an aliphatic or aromatic triamine comprising two primary amines and at least one secondary amine.

10. The method of claim 5 wherein the condensation product of the triamine with the triacid anhydride is the reaction of one or more of diethylenetriamine (DETA), dipropylenetriamine (DPTA) and diaminodiphenylamine (DADPA) with approximately 3 trimellitic anhydride (TMA) equivalents.

## Patentansprüche

1. Verfahren zum Herstellen eines Polyamidimid(PAI)-Harzes, umfassend:
Umsetzen eines dreisäurigen Anhydrids mit einem Diisocyanat, wobei 10-90 mol-% des dreisäurigen Anhydrids durch ein Kondensationsprodukt eines Triamins mit zwei Äquivalenten eines dreisäurigen Anhydrids und einem Äquivalent einer Verbindung der Formel 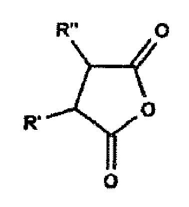 und/oder der Formel 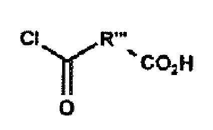 ersetzt werden, wobei R' und R" H, eine substituierte oder nichtsubstituierte Alkyl- oder Arylgruppe (einschließlich einer 1,2-disubstituierten Arylring-Gruppe) sind; und R"' eine beliebige substituierte oder nichtsubstituierte aliphatische oder aromatische Gruppe ist.

2. Verfahren gemäß Anspruch 1, wobei das dreisäurige Anhydrid und das Diisocyanat in etwa äquimolaren Mengen umgesetzt werden.

3. Verfahren gemäß Anspruch 1, wobei das Triamin ein aliphatisches oder aromatisches Triamin ist, umfassend zwei primäre Amine und wenigstens ein sekundäres Amin.

4. Verfahren gemäß Anspruch 1, wobei das Kondensationsprodukt des Triamins mit dem dreisäurigen Anhydrid die Umsetzung von einem oder mehreren von Diethylentriamin (DETA), Dipropylentriamin (DPTA) und Diaminodiphenylamin (DADPA) mit etwa 3 Äquivalenten Trimellitinsäureanhydrid (TMA) ist.

5. Verfahren zum Herstellen eines Polyamidimidharzes, umfassend:
Umsetzen eines dreisäurigen-Anhydrid-Säurechlorids mit einem Diamin, wobei 10-90 mol-% des dreisäurigen-Anhydrid-Säurechlorids durch ein Kondensationsprodukt eines Triamins mit zwei Äquivalenten eines dreisäurigen Anhydrids und einem Äquivalent einer Verbindung der Formel 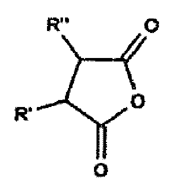 und/oder der Formel 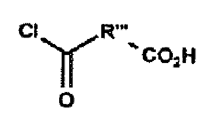 ersetzt werden, wobei R' und R" H, eine substituierte oder nichtsubstituierte Alkyl- oder Arylgruppe (einschließlich einer 1,2-disubstituierten Arylring-Gruppe) sind; und R'" eine beliebige substituierte oder nichtsubstituierte aliphatische oder aromatische Gruppe ist.

6. Verfahren gemäß Anspruch 5, wobei die Säuregruppen zu Säurechloriden umgewandelt werden.

7. Verfahren gemäß Anspruch 6, wobei das dreisäurigen-Anhydrid-Säurechlorid und das Diamin in etwa äquimolaren Mengen umgesetzt werden.

8. Verfahren gemäß Anspruch 6, wobei bei dem Kondensationsprodukt eines Triamins und eines dreisäurigen Anhydrids das Triamin mit etwa drei Äquivalenten des dreisäurigen Anhydrids umgesetzt wird.

9. Verfahren gemäß Anspruch 5, wobei das Triamin ein aliphatisches oder aromatisches Triamin ist, umfassend zwei primäre Amine und wenigstens ein sekundäres Amin.

10. Verfahren gemäß Anspruch 5, wobei das Kondensationsprodukt des Triamins mit dem dreisäurigen Anhydrid die Umsetzung von einem oder mehreren von Diethylentriamin (DETA), Dipropylentriamin (DPTA) und Diaminodiphenylamin (DADPA) mit etwa 3 Äquivalenten Trimellitinsäureanhydrid (TMA) ist.

## Revendications

1. Méthode de production d'une résine de polyamideimide (PAI), comprenant :
la réaction d'un anhydride triacide avec un diisocyanate, où 10-90% molaire de l'anhydride triacide sont remplacés par un produit de condensation d'une triamine avec deux équivalents d'un anhydride triacide et un équivalent d'un composé de formule 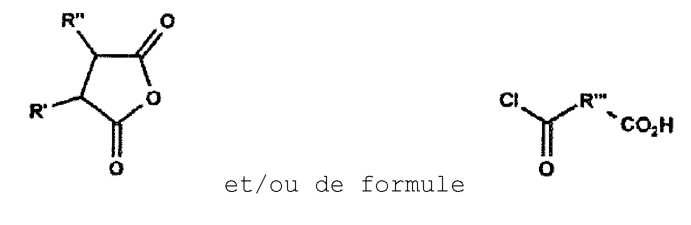 dans lesquelles R' et R" sont H, un groupement alkyle ou aryle substitué ou non substitué (y compris un groupement de cycle aryle 1,2-disubstitué) ; et R"' est un groupement aliphatique ou aromatique substitué ou non substitué quelconque.

2. Méthode selon la revendication 1, dans laquelle l'anhydride triacide et le diisocyanate sont réagis selon des quantités approximativement équimolaires.

3. Méthode selon la revendication 1, dans laquelle la triamine est une triamine aliphatique ou aromatique comprenant deux amines primaires et au moins une amine secondaire.

4. Méthode selon la revendication 1, dans laquelle le produit de condensation de la triamine avec l'anhydride triacide est la réaction d'un ou plusieurs parmi la diéthylènetriamine (DETA), la dipropylènetriamine (DPTA) et la diaminodiphénylamine (DADPA) avec environ 3 équivalents d'anhydride trimellitique (TMA).

5. Méthode de production d'une résine de polyamideimide, comprenant :
la réaction d'un chlorure d'acide et d'anhydride triacide avec une diamine, où 10-90% molaire du chlorure d'acide et d'anhydride triacide sont remplacés par un produit de condensation d'une triamine avec deux équivalents d'un anhydride triacide et un équivalent d'un composé de formule 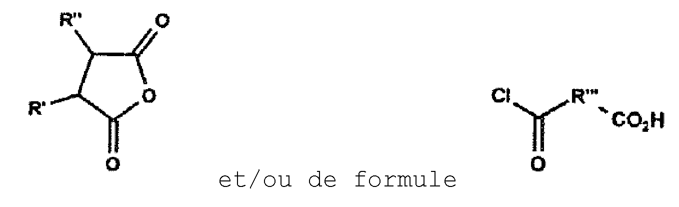 dans lesquelles R' et R" sont H, un groupement alkyle ou aryle substitué ou non substitué (y compris un groupement de cycle aryle 1,2-disubstitué) ; et R"' est un groupement aliphatique ou aromatique substitué ou non substitué quelconque.

6. Méthode selon la revendication 5, dans laquelle les groupements acides sont convertis en chlorures d'acide.

7. Méthode selon la revendication 6, dans laquelle le chlorure d'acide et d'anhydride triacide et la diamine sont réagis selon des quantités approximativement équimolaires.

8. Méthode selon la revendication 6, dans laquelle, dans le produit de condensation d'une triamine et d'un anhydride triacide, la triamine est réagie avec environ trois équivalents de l'anhydride triacide.

9. Méthode selon la revendication 5, dans laquelle la triamine est une triamine aliphatique ou aromatique comprenant deux amines primaires et au moins une amine secondaire.

10. Méthode selon la revendication 5, dans laquelle le produit de condensation de la triamine avec l'anhydride triacide est la réaction d'un ou plusieurs parmi la diéthylènetriamine (DETA), la dipropylènetriamine (DPTA) et la diaminodiphénylamine (DADPA) avec environ 3 équivalents d'anhydride trimellitique (TMA).
